## Europäisches Patentamt

## European Patent Office

## Office européen des brevets

(11) Veröffentlichungsnummer: **0 172 391**
**B1**

(12) **EUROPÄISCHE PATENTSCHRIFT**

(45) Veröffentlichungstag der Patentschrift:
20.09.89

(21) Anmeldenummer: 85108687.6

(22) Anmeldetag: 11.07.85

(51) Int. Cl.⁴: $G\ 01\ P\ \ 3/36$

(54) Verfahren und Einrichtung zur Drehratenmessung unter Verwendung des Sagnac-Effekts.

(30) Priorität: 20.07.84 DE 3426867

(43) Veröffentlichungstag der Anmeldung:
26.02.86 Patentblatt 86/09

(45) Bekanntmachung des Hinweises auf die Patenterteilung: 20.09.89 Patentblatt 89/38

(84) Benannte Vertragsstaaten:
CH DE FR GB IT LI NL SE

(56) Entgegenhaltungen:
DE–A– 2 934 794
DE–A– 3 247 014
GB–A– 2 121 532
US–A– 4 408 882

(73) Patentinhaber: LITEF GmbH
Lörracher Strasse 18
D-7800 Freiburg/Br. (DE)

(72) Erfinder: Schröder, Werner, Dr.
Mittelweg 22
D-7801 Umkirch (DE)

(74) Vertreter: Patentanwälte TER MEER - MÜLLER - STEINMEISTER
Mauerkircherstrasse 45
D-8000 München 80 (DE)

EP 0 172 391 B1

## Beschreibung

Die Erfindung betrifft ein Verfahren und eine Einrichtung zur Drehratenmessung und digitalen Auslesung unter Verwendung des Sagnac-Effekts, bei dem ein aus einer kohärenten Lichtquelle stammender Lichtstrahl in mehrere Teillichtstrahlen aufgeteilt wird, die in entgegengesetzter Richtung in eine Lichtleit-Faserspule eingestrahlt werden. Nach dem Durchlaufen der Faserspule werden die Teillichtstrahlen wiederum zu einem einzigen Lichtstrahl vereinigt, der auf einen Photodetektor gelangt. Zur Bestimmung der Drehrate wird die aus einer Drehung resultierende Sagnac-Phasenverschiebung durch elektronische Nachregelung kompensiert.

Bei einem auf dem Sagnac-Effekt beruhenden Faserinterferometerkreisel kann die durch eine Drehung verursachte Phasendifferenz der beiden gegensinnig umlaufenden Teillichtströme dadurch kompensiert werden, daß durch Modulation der Teillichtströme eine Frequenzdifferenz eingeführt wird. Durch eine Regelung der Frequenzverschiebung wird die von einer Drehung herrührende Phasenverschiebung kompensiert. Diese Möglichkeit der Kompensation ist im Prinzip schon lange bekannt (vgl. R.F. Cahill und E. Udd : Opt. Lett. 4, 3 (1979), « Phase-nulling Fibre Optic Laser Gyros »). Der Frequenzversatz kann jedoch nicht im erwünschten Bereich sehr kleiner Frequenzen durchgeführt werden, da übliche Einseitenbandmodulatoren (Bragg-Zellen) nur oberhalb etwa 20 MHz erhältlich sind. Die durch eine so hohe Frequenzdifferenz erzeugte große Phasendifferenz läßt nur eine Kompensation in hoher Ordnung zu, wenn mit nur einem Einseitenbandmodulator gearbeitet wird. Da die Phasendifferenz proportional zur optischen Länge der Faser ist, ergibt sich eine außerordentlich starke Nullpunktdrift in Abhängigkeit von der Temperatur. Dieser Nachteil wird gemäß dem aus der DE-OS 2 934 794 bekannten Vorschlag dadurch überwunden, daß zwei Einseitenbandmodulatoren verwendet werden, wodurch die tatsächliche Differenzfrequenz in der Faserspule wesentlich kleiner bleibt als die beiden Einzelfrequenzen der Modulatoren. Im Vergleich zu einem Interferometer mit nur einem Modulator läßt sich bei der Benutzung zweier Modulatoren die Meßgenauigkeit und Stabilität maximal etwa um den Faktor 33 verbessern, was in der genannten DE-OS ausführlich dargestellt ist.

Der Erfindung liegt die Aufgabe zugrunde, die Genauigkeit der Drehratenmessung mittels eines Faserinterferometerkreisels bei vereinfachtem Aufbau der Meß- und Ausleseanordnung wesentlich zu steigern und temperaturabhängige Änderungen der Nullpunktdrift, der Skalenfaktoren etc. weitgehend vollständig zu vermeiden.

Die erfindungsgemäße Lösung ist verfahrensmäßig im Patentanspruch 1 angegeben.

Eine erfindungsgemäße Einrichtung zur Drehratenauslesung mittels eines Faserinterferometerkreisels ist im Patentanspruch 3 wiedergegeben.

Vorteilhafte Weiterbildungen des Erfindungsgedankens sind in den abhängigen Ansprüchen gekennzeichnet.

Die Erfindung nutzt zur Eliminierung der Nullpunktdrift die Tatsache aus, daß Temperaturänderungen der Faserspule — schon zur Vermeidung nullpunktverschiebender Temperaturgradienten — langsam erfolgen und andererseits die Vorzeichenumkehr der Phasendifferenz bei Vorzeichenumkehr der Differenzfrequenz erfolgt.

Die Erfindung und vorteilhafte Einzelheiten werden nachfolgend unter Bezug auf die Zeichnung in einer beispielsweisen Ausführungsform näher erläutert. Es zeigen :

Fig. 1 eine schematische Skizze zur Erläuterung und Ableitung der physikalisch-mathematischen Zusammenhänge ;

Fig. 2 den Prinzipaufbau eines Faserinterferometerkreisels mit erfindungsgemäßen Merkmalen ;

Fig. 3 den Prinzipaufbau mit nur einem akustooptischen Koppler ; und

Fig. 4 den Anordnungs- und Schaltungsaufbau einer verwirklichten und erprobten Drehratenmeßanordnung, aufgebaut nach dem anhand der Fig. 2 verdeutlichten Prinzip, ebenfalls mit einem akustooptischen Koppler.

Einander entsprechende Baugruppen sind in den Figuren mit den gleichen Bezugshinweisen gekennzeichnet.

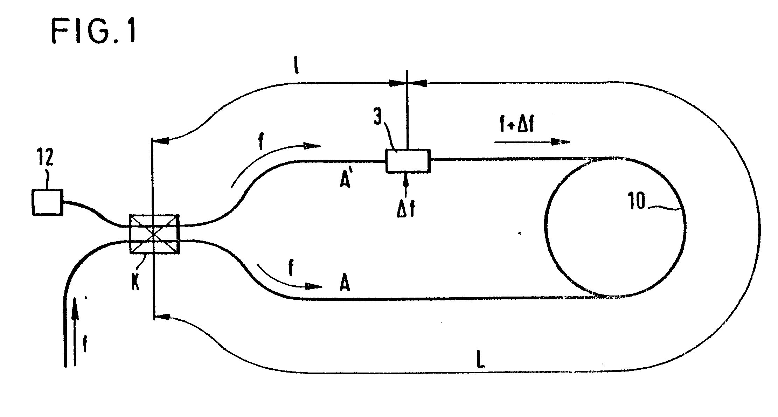

Der optische Prinzipaufbau nach Fig. 1 zeigt einen von einer kohärenten Lichtquelle ausgehenden Lichtstrom der Frequenz f, der an einem Koppler K in zwei Teillichtströme A und A' aufgeteilt wird. Der eine Teillichtstrom A wird in einer Richtung in eine Lichtleit-Faserspule 10 unverändert eingeleitet, während die Frequenz des zweiten Teillichtstroms A' mittels eines Modulators 3 um $\Delta f$ verschoben wird. Der am Modulator 3 austretende Teillichtstrom wird in Gegenrichtung in die Faserspule 10 eingeleitet. Nach dem Durchlaufen der Faserspule werden die beiden Teillichtströme im Koppler K wieder vereinigt und auf einen Photodetektor 12 geleitet.

Für die Phasendifferenz am Koppler K nach Durchlaufen der Faserspule 10 gilt unter Zugrundelegung der in Fig. 1 angegebenen Strecken :

$$\Delta\Phi = \frac{2\,\pi n\,(L-\ell)}{c}\,\Delta f + \Phi_s \tag{1}$$

wobei die Sagnac-Phase gegeben ist durch :

$$\Phi_s = \frac{4\,\pi \cdot R \cdot L}{\lambda_0 \cdot c}\,\Omega \qquad (2)$$

(R : Spulenradius, L : Faserlänge, $\ell$ : Faserlänge zwischen Koppler K und Modulator 3, $\lambda_0$ : Lichtwellenlänge, c : Lichtgeschwindigkeit, $\Omega$ : Drehrate, n : Brechungsindex).

Wird nun die Frequenz $\Delta f^+$ so geregelt, daß die Sagnac-Phase $\Phi_s$ in $m^{ter}$ Ordnung kompensiert wird, so gilt :

$$\Delta\Phi_m = 2\,\pi m = \frac{2\,\pi n\,(L-\ell)}{c}\,\Delta f^+ + \Phi_s \qquad (3)$$

Gemäß der Erfindung wird ein dritter Teillichtstrom erzeugt, der eine Frequenzverschiebung $\Delta f^-$ erfährt. Der Regelkreis ist so eingerichtet, daß bei dieser Vorzeichenumkehr von $\Delta f$ die Sagnac-Phasendifferenz in $-k^{ter}$ Ordnung kompensiert wird. Damit gilt entsprechend Gleichung (3) :

$$\Delta\Phi_{-k} = -2\,\pi k = \frac{-2\,\pi n\,(L-\ell)}{c}\,\Delta f^- + \Phi_s \qquad (4)$$

Ist die Drehrate $\Omega$, die für beide schnell aufeinanderfolgenden Messungen (Umschaltfrequenz beispielsweise 200 Hz) als konstant angenommen wird, ungleich Null, so wird die Addition von Gleichung (3) und Gleichung (4) liefern :

$$2\,\Phi_s = \frac{2\,\pi n\,(L-\ell)}{c}\,(\Delta f^- - \Delta f^+) + \text{mod}\,(2\,\pi) \qquad (5)$$

Die Differenz ergibt

$$2\,\pi\,(m+k) = \frac{2\,\pi n\,(L-\ell)}{c}\,(\Delta f^+ + \Delta f^-) \qquad (6)$$

Zusammengefaßt ergibt sich damit für die Sagnac-Phase :

$$2\,\Phi_s = \frac{(\Delta f^- - \Delta f^+)}{(\Delta f^+ + \Delta f^-)}\,2\,\pi\,(m+k) + \text{mod}\,(2\,\pi) \qquad (7)$$

Ersichtlicherweise läßt sich auf diese Weise aus den Frequenzsignalen $\Delta f^+$ und $\Delta f^-$ sowohl die Drehrate ohne Nullpunktdriftabhängigkeit bestimmen als auch über Gleichung (6) die optische Länge des Faserinterferometers und damit seine Temperatur und sein Skalenfaktor.

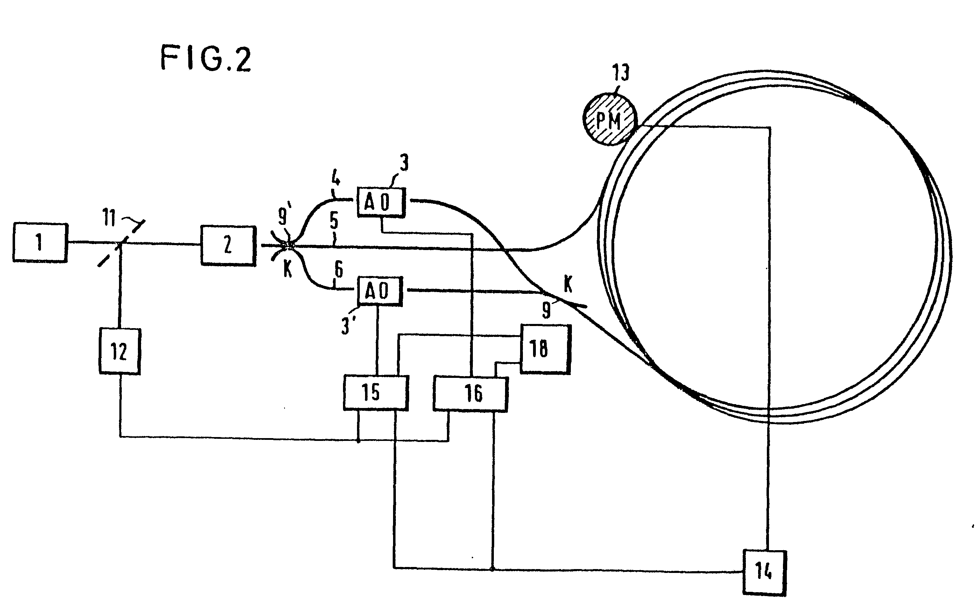

Eine Ausführungsform für das der Erfindung zugrundeliegende Verfahrensprinzip verdeutlicht die Fig. 2 :

Das Licht einer monochromatischen Lichtquelle 1 durchquert einen Polarisator 2 und wird am Koppler 9' in drei Teillichtstrahlen 4, 5 und 6 aufgeteilt. Der Lichtstrahl 5 wird unverändert in die Faserspule 10 eingekoppelt. Die Teillichtstrahlen 4 bzw. 6 werden mittels akustooptischer Modulatoren 3 bzw. 3', z. B. Bragg-Zellen, um $\Delta f^+$ bzw. $\Delta f^-$ frequenzverschoben und abwechselnd in entgegengesetzter Richtung zum Lichtstrahl 5 über Koppler 9 in die Faserspule 10 eingekoppelt. Die wechselseitige Einkopplung der Lichtstrahlen 4 bzw. 6 erfolgt durch die Ansteuerung der elektronischen Regelkreise 15 bzw. 16. Die Umschaltfrequenz ist jeweils so hoch, daß Temperaturänderungen vernachlässigbar sind und andererseits so niedrig, daß auch die Umschaltung der zur Gesamtanordnung gehörenden Regelkreise problemlos möglich ist ; sie liegt somit im Bereich von etwa 10 Hz bis zu einigen 100 Hz. In der Praxis wurden Umschaltfrequenzen im Bereich von 100 bis 200 Hz angewandt. Die beiden Lichtstrahlen werden im Koppler 9' wieder vereinigt und gelangen über den Polarisator 2 und den Strahlteiler 11 zum Photodetektor 12. Das Signal des Photodetektors 12 wird von den Regelkreisen 15 bzw. 16 benutzt, um die akustooptischen Modulatoren 3' bzw. 3 so anzusteuern, daß am Photodetektor 12 das Signal zu Null geregelt wird. Ein Signalgenerator 18 steuert die elektronischen Regelkreise 15 und 16 derart, daß die Lichtstrahlen 4 bzw. 6 abwechselnd in die Faserspule 10 eingekoppelt werden. Die Phasenmodulation der Lichtstrahlen in der Faserspule 10 erfolgt mittels eines bekannten Phasenmodulators 13, der von einem Oszillator 14 angesteuert wird.

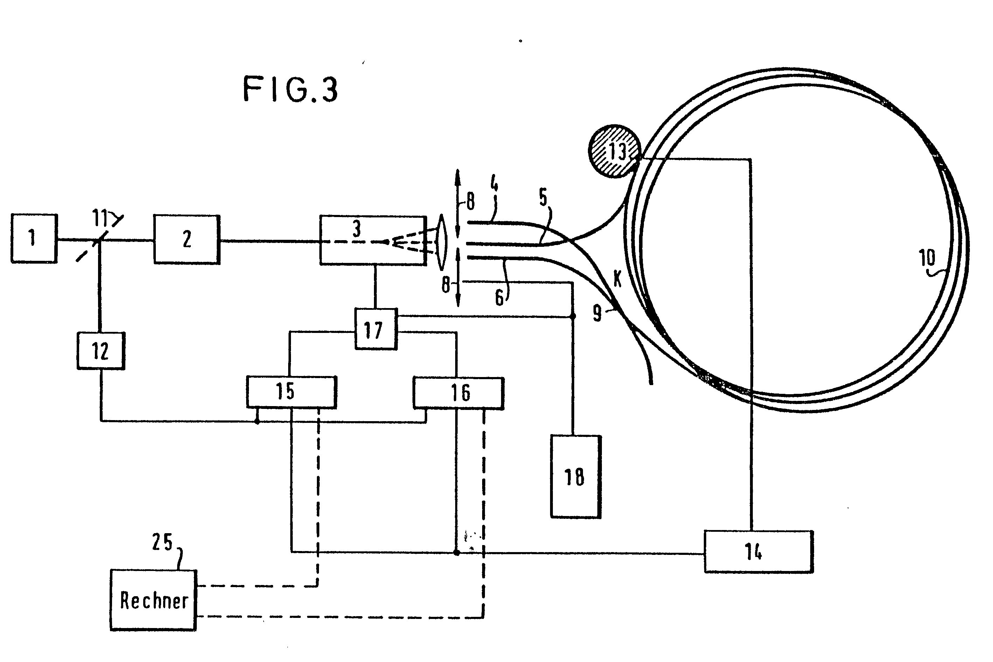

Fig. 3 zeigt eine weitere vorteilhafte und einfache Ausführungsform für das der Erfindung zugrundeliegende Verfahrensprinzip :

Das Licht der monochromatischen Lichtquelle 1 gelangt durch einen Polarisator 2 in einen akustooptischen Modulator 3 (beispielsweise Bragg-Zelle), der im Raman-Nath-Gebiet betrieben wird. Ausgangsseitig zeigen sich drei Lichtstrahlen 4, 5 und 6, nämlich ein um $\Delta f^+$ in der Frequenz erhöhter Lichtstrahl 4, ein unveränderter Lichtstrahl 5 sowie ein in der Frequenz um $\Delta f^-$ erniedrigter dritter Lichtstrahl 6. Der in der Frequenz unveränderte Lichtstrahl 5 wird in einer ersten Richtung in das entsprechende offene Faserende der Faserspule 10 eingekoppelt. Die beiden anderen in der Frequenz erhöhten bzw. erniedrigten Lichtstrahlen 4 bzw. 6 werden abwechselnd in zum Lichtstrahl 5 entgegengesetzter Richtung in die Faserspule 10 eingekoppelt. Die wechselweise Umschaltung erfolgt durch einen optischen Schalter oder Schieber 8, der elektromagnetisch oder piezoelektrisch betätigbar ist. Dabei handelt es sich beispielsweise um eine auf einem piezoelektrischen Doppelschichtelement (Bimorph) befestigte Blendenanordnung. Für die Umschaltfrequenz des Schalters 8 gelten die oben genannten Kriterien. Über den optischen Schalter 8 lassen sich die Teillichtstrahlen 4 bzw. 6 so absperren, daß jeweils nur einer der beiden Teillichtstrahlen über einen Koppler 9 in die Faserspule 10 gelangen kann. Die Vereinigung der beiden zurückkehrenden Lichtstrahlen erfolgt im Modulator 3. Das Licht durchquert anschließend einen Polarisator 2 und wird über einen Strahlteiler 11 in einen Photodetektor 12 eingestrahlt.

Die Phasenmodulation der Lichtstrahlen in der Faserspule 10 erfolgt mittels eines Phasenmodulators 13, der von einem Oszillator 14 angesteuert wird. Die entsprechende aus dem Signal des Photodetektors 12 abgeleitete Frequenzkomponente wird über zwei elektronische Regelkreise 15 bzw. 16, die für den Teillichtstrahl 4 bzw. 6 zuständig sind, zu Null geregelt. Der Signalgenerator 18 steuert sowohl den optischen Schalter 8 als auch die Umschaltung der modulierten Hochfrequenz für den akustooptischen Modulator 3 über einen Umschalter 17.

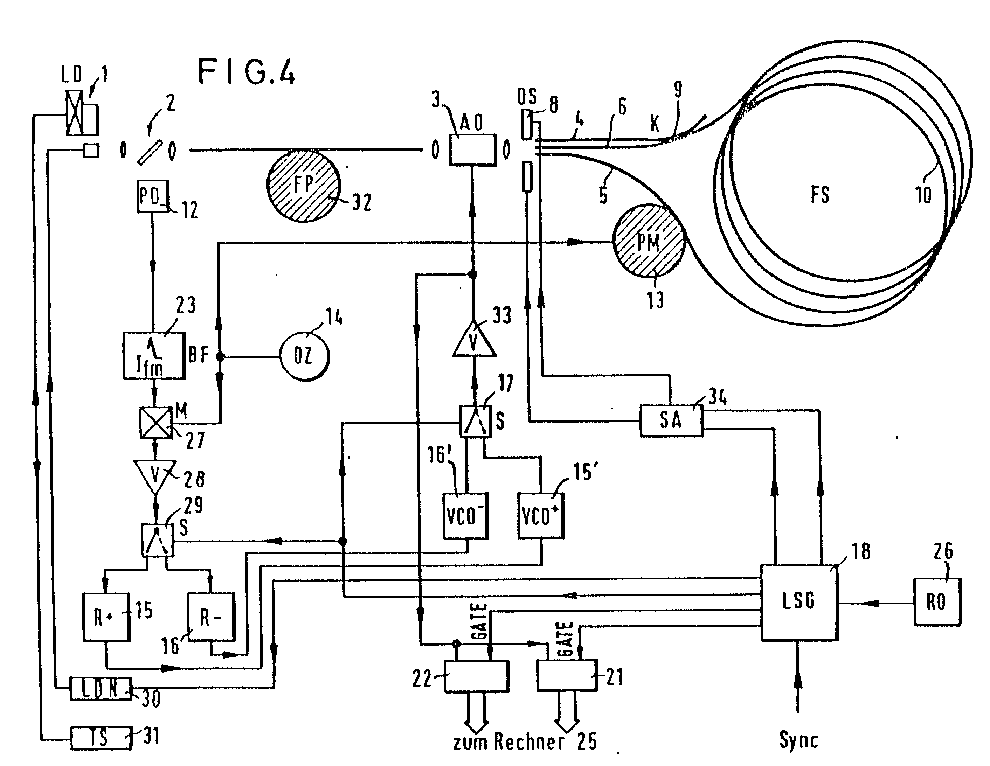

Fig. 4 zeigt eine vollständige Anordnung eines Sagnac-Interferometers mit akustooptischem Modulator. Das kohärente Licht einer mittels einer Einrichtung 31 temperaturstabilisierten Lichtquelle 1 gelangt über einen Polarisator 2 zu einem im Raman-Nath-Gebiet arbeitenden akustooptischen Modulator 3. Dieser teilt das Licht in drei Teillichtstrahlen auf, wovon der unmodulierte Lichtstrahl 5 in die eine Umfangsrichtung geschickt wird. Mittels der optischen Schalter 8 wird abwechselnd jeweils ein moduliertes Lichtbündel 4 bzw. 6 in die andere Umfangsrichtung der Faserspule 10 eingespeist. Die Lichtstrahlen werden im akustooptischen Modulator 3 wieder vereinigt und gelangen durch den Polarisator 2 auf die Photodiode 12. Mit Hilfe des Oszillators 14 und des Phasenmodulators 13 wird das Ausgangssignal des Rings moduliert. Das Signal der Photodiode 12 gelangt über Bandfilter 23, Mischer 27, Verstärker 28 und Schalter 29 zum Regler 15 bzw. 16. Dieser steuert die Ausgangsfrequenz des VCO 15′ bzw. 16′ (spannungsgesteuerter Oszillator), dessen Signal über Schalter 17 und Verstärker 33 den akustooptischen Modulator 3 derart ansteuert, daß das Signal an der Photodiode 12 verschwindet. Das Ausgangssignal des Verstärkers 33 wird über die Zähler 22 bzw. 21 vom Rechner 25 als Information über Temperatur und Drehrate ausgewertet. Ein synchronisierter Signalgeber 18, der von einem Referenzoszillator 26 getrieben wird, steuert über den Schalter 34 die optischen Schalter 8 sowie die Schalter 17 und 29 und gibt Gate-Pulse an die Zähler 21 und 22 ab. Die Laserdiode 1 wird während der Umschaltzeit über deren Netzteil 30 abgeschaltet.

Eine Voraussetzung für das erfindungsgemäße Verfahren ist eine genügend kohärente Lichtquelle, damit eine Interferenz in $m^{ter}$ bzw. $k^{ter}$ Ordnung gesehen werden kann. Für diesen Zweck sind seit kurzem bekannte, über einen externen Resonator rückgekoppelte Single-Mode-Halbleiterlaser gut geeignet.

Nach einer anderen möglichen Ausführung des erfindungsgemäßen Faserinterferometers kann eine kontinuierliche Einkopplung der Strahlen 4 und 6 erfolgen, so daß keine optischen Schalter/Blenden benötigt werden. Dazu wird je ein Phasenmodulator in den Teillichtstrahlen 4 bzw. 6 angeordnet, deren Modulationsfrequenzen voneinander verschieden sind. Die mit entsprechenden Filtern bestückte Regelelektronik kann dann zwischen dem Teilstrahl 4 bzw. 6 unterscheiden und die Signale wieder trennen.

Die besonderen Vorteile der Erfindung lassen sich wie folgt zusammenfassen :

Es wird ein digitales Drehratensignal mit sehr großem Dynamikbereich erhalten, das temperatur- und brechungsindexunabhängig ist.

Störende niederfrequente Interferenzen treten nicht auf, da Rayleigh-gestreutes Licht der Faser um mindestens $\Delta f$ in der Frequenz vom Nutzsignal abgesetzt wird.

Der Meßaufbau wird vergleichsweise einfach.

## Patentansprüche

1. Verfahren zur Drehratenmessung unter Verwendung des Sagnac-Effekts, bei dem

ein aus einer kohärenten Lichtquelle stammender Lichtstrahl in mehrere Teillichtstrahlen aufgeteilt wird, die in entgegensetzter Richtung in eine Lichtleit-Faserspule eingestrahlt werden,

nach dem Durchlaufen der Faserspule die Teillichtstrahlenn wieder zu einem einzigen Lichtstrahl vereinigt werden, der einen Photodetektor beaufschlagt und bei dem

zur Bestimmung der Drehrate die aus einer Drehung resultierende Sagnac-Phasenverschiebung durch Nachregelung elektronisch kompensiert wird, wobei

drei Teillichtstrahlen (4, 5, 6) erzeugt werden,

wovon ein erster Teillichtstrahl (5) in einer Richtung in die Faserspule (10) eingeleitet wird und

der zweite und dritte Teillichtstrahl (4, 6) in entgegengesetzter Richtung in die Faserspule (10) eingeleitet werden,

die Frequenz des zweiten Teillichtstrahls um einen bestimmten Frequenzwert erhöht wird und die Frequenz des dritten Teillichtstrahls um etwa den gleichen Frequenzwert erniedrigt wird, wobei die beiden Frequenzwerte so geregelt werden, daß die optischen Phasendifferenzen nach Durchlaufen der Faserspule (10) und Wiedervereinigung des ersten mit dem zweiten Teillichtstrahl konstant und vorzugsweise auf einem Wert von $m \cdot 2\pi$, m ganzzahlig, bzw. des ersten mit dem dritten Teillichtstrahl ebenfalls konstant und vorzugsweise auf einem Wert $k \cdot 2\pi$, k ganzzahlig, gehalten werden,

die Differenzfrequenzen zwischen dem ersten und zweiten Teillichtstrahl und zwischen dem ersten und dritten Teillichtstrahl ausgelesen werden, und

der Quotient aus Differenz und Summe der beiden Differenzfrequenzwerte gebildet wird und daraus ein Maß für die Drehrate gewonnen wird.

2. Verfahren nach Anspruch 1, wobei die Differenzfrequenzen summiert werden und daraus die optische Länge der Faserspule (10) und damit der Skalenfaktor der Drehratenmessung und die Temperatur bestimmt werden.

3. Einrichtung zur Drehratenauslesung unter Verwendung des Sagnac-Effekts, bei dem ein aus einer kohärenten Lichtquelle (1) stammender Lichtstrahl in mehrere Teillichtstrahlen aufgeteilt wird, die in entgegengesetzter Richtung in eine Lichtleit-Faserspule (10) eingestrahlt werden, mit

einem Modulator für wenigstens einen der Teillichtstrahlen,

einer Einrichtung zur erneuten Vereinigung der Teillichtstrahlen zu einem einzigen Lichtstrahl nach Durchlaufen der Faserspule,

einem von dem wiedervereinigten Lichtstrahl beaufschlagten Photodetektor (12),

einer Regelschaltung, die zur Bestimmung der Drehrate die aus einer Drehung resultierende Sagnac-Phasenverschiebung durch Nachregelung elektronisch kompensiert,

einer Strahlteilereinrichtung (K ; 3, 9') zur Aufteilung des aus der Lichtquelle (1) stammenden Lichtstrahls in mindestens drei Teillichtstrahlen (4, 5, 6),

einer Vorrichtung zur Einkopplung eines ersten Teillichtstrahls in einer Richtung in die Faserspule (10),

einer Vorrichtung zur Einkopplung des zweiten und des dritten Teillichtstrahls in der Gegenrichtung in die Faserspule (10),

frequenzverschiebende Einrichtungen zur Erhöhung der Frequenz des zweiten Teillichtstrahls (4) um einen bestimmten Frequenzwert und zur Erniedrigung der Frequenz des dritten Teillichtstrahls (6) um einen anderen bestimmten Frequenzwert,

einer Regeleinrichtung (15, 16, 18) für die beiden Frequenzwerte, welche so gebaut ist, daß sie die optischen Phasendifferenzen nach Durchlauf der Teillichtstrahlen durch die Faserspule (10) und nach Wiedervereinigung des ersten mit dem zweiten Teillichtstrahl konstant und vorzugsweise auf einem Phasenwert von $m \cdot 2\pi$, m ganzzahlig, bzw. des ersten mit dem dritten Teillichtstrahl ebenfalls konstant und vorzugsweise auf einem Phasenwert von $k \cdot 2\pi$, k ganzzahlig, hält,

einem Photodetektor (12) zum Empfang aller Teillichtstrahlen über die Strahlteilereinrichtung, nachdem diese die Faserspule (10) durchlaufen haben, und mit

einer Auswerteschaltung zur Bildung von Differenz und Summe der Differenzfrequenzen sowie zur Berechnung der Drehrate aus dem Quotienten von Differenz und Summe und zur Berechnung des Skalenfaktors und der Temperatur der Faserspule aus der Summe der beiden Differenzfrequenzen.

4. Einrichtung nach Anspruch 3, wobei die Faserspule (10) aus stark doppelbrechender, polarisationserhaltender Monomodefaser besteht.

5. Einrichtung nach Anspruch 3, wobei die Faserspule (10) aus polarisierender Monomodefaser besteht.

6. Einrichtung nach Anspruch 3, wobei die Faserspule (10) aus beliebiger Monomodefaser mit einem Polarisator besteht.

7. Einrichtung nach Anspruch 3, wobei Modulatoren und Koppler in integrierter Optik ausgeführt sind.

8. Einrichtung nach einem der vorstehenden Ansprüche 3 bis 7, wobei die geregelte frequenzverschiebende Einrichtung aus zwei Bragg-Zellen besteht.

9. Einrichtung nach einem der vorstehenden Ansprüche 3 bis 7, wobei die geregelte frequenzverschiebende Einrichtung ein akustooptischer Modulator mit zwei akustischen Erregern ist.

10. Einrichtung nach einem der vorstehenden Ansprüche 3 bis 7, wobei die geregelte frequenzverschiebende Einrichtung eine einzelne Bragg-Zelle mit unterschiedlichen Frequenzsteuerungen ist.

11. Einrichtung nach einem der vorstehenden Ansprüche 3 bis 7, wobei die Strahlteilereinrichtung und die geregelte frequenzverschiebende Einrichtung aus einem im Raman-Nath-Gebiet arbeitenden akustooptischen Modulator besteht.

12. Einrichtung nach einem der vorstehenden Ansprüche 3 bis 10, wobei die verschobenen Frequenzen alternativ wechselnd durch Anlegen entsprechender Frequenzen an die geregelte frequenzverschiebende Einrichtung in den Resonator eingestrahlt werden.

13. Einrichtung nach einem der vorstehenden Ansprüche 3 bis 11, wobei die verschobenen Frequenzen alternativ wechselnd durch über elektromagnetisch oder piezoelektrisch steuerbare Blenden (21, 22) in den Resonator eingestrahlt werden.

14. Einrichtung nach einem der vorstehenden Ansprüche 3 bis 11, wobei die verschobenen Frequenzen kontinuierlich in den Resonator eingestrahlt werden, aber zusätzlich verschieden moduliert und nach dem Photodetektor (16) durch entsprechende Filterung wieder getrennt werden.

## Claims

1. Method for measuring the rate of rotation, using the Sagnac effect, in which method

a light beam originating from a coherent light source is divided into several component light beams which are radiated in opposite directions into a light-conducting fibre coil,

after having passed through the fibre coil, the component light beams are recombined to form a single light beam which is applied to a photodetector and in which

the Sagnac phase shift resulting from one rotation is electronically compensated by readjustment for determining the rate of rotation, in which

three component light beams (4, 5, 6) are generated,

of which a first component light beam (5) is introduced into the fibre coil (10) in one direction and

the second and third component light beams (4, 6) are introduced into the fibre coil (10) in the opposite direction,

the frequency of the second component light beam is raised by a particular frequency value and the frequency of the third component light beam is lowered by approximately the same frequency value, the two frequency values being regulated in such a manner that the optical phase differences, after passing through the fibre coil (10) and recombining the first with the second component light beam, are kept constant and preferably at a value of $m \cdot 2\pi$, | m integral |, and of the first with the third component light beam are also kept constant and preferably at a value $k \cdot 2\pi$, | k integral |,

the differential frequencies between the first and second component light beam and between the first and third component light beam are read out, and

the quotient from the difference and sum of the two differential frequency values is formed and a measure for the rate of rotation is obtained therefrom.

2. Method according to Claim 1, in which the differential frequencies are summed and the optical length of the fibre coil (10) and thus the scale factor of the measurement of the rate of rotation and the temperature is determined therefrom.

3. Device for reading out a rate of rotation, using the Sagnac effect, in which device a light beam originating from a coherent light source (1) is divided into several component light beams which are radiated in opposite directions into a light-conducting fibre coil (10), comprising

a modulator for at least one of the component light beams,

a device for recombining the component light beams to form a single light beam after having passed through the fibre coil,

a photodetector (12) to which the recombined light beam is applied,

a regulating circuit which electronically compensates by readjustment the Sagnac phase shift resulting from one rotation for determining the rate of rotation,

a beam divider device (K ; 3, 9') for dividing the light beam originating from the light source (1) into at least three component light beams (4, 5, 6),

a device for coupling of a first component light beam into the fibre coil (10) in one direction,

a device for coupling of the second and of the third component light beam into the fibre coil (10) in the opposite direction,

frequency-shifting devices for raising the frequency of the second component light beam (4) by a particular frequency value and for lowering the frequency of the third component light beam (6) by another particular frequency value

a regulating device (15, 16, 18) for the two frequency values, which is constructed in such a manner that it keeps the optical phase differences constant and preferably at a phase value of $m \cdot 2\pi$, | m integral |, after the component light beams have passed through the fibre coil (10) and after the first has been recombined with the second component light beam, and also constant and a preferably at a phase value of $k \cdot 2\pi$, | k integral |, after the first has been combined with the third component light beam,

a photodetector (12) for receiving all component light beams via the beam divider device after these have passed through the fibre coil (10), and comprising

an evaluating circuit for forming the difference and the sum of the differential frequencies and for calculating the rate of rotation from the quotient from the difference and sum and for calculating the scale factor and the temperature of the fibre coil from the sum of the two differential frequencies.

4. Device according to Claim 3, in which the fibre coil (10) consists of strongly birefringent, polarization-maintaining monomode fibre.

5. Device according to Claim 3, in which the fibre coil (10) consists of polarizing monomode fibre.

6. Device according to Claim 3, in which the fibre coil (10) consists of any type of monomode fibre and a polarizer.

7. Device according to Claim 3, in which modulators and couplers are constructed in integrated optics.

8. Device according to one of the preceding Claims 3 to 7, in which the regulated frequency-shifting device consists of two Bragg cells.

9. Device according to one of the preceding Claims 3 to 7, in which the regulated frequency-shifting device is an acousto-optical modulator comprising two acoustic exciters.

10. Device according to one of the preceding Claims 3 to 7, in which the regulated frequency-shifting device is a single Bragg cell comprising different frequency control arrangements.

11. Device according to one of the preceding Claims 3 to 7, in which the beam divider device and the regulated frequency-shifting device consists of an acousto-optical modulator operating in the Raman-Nath region.

12. Device according to one of the preceding Claims 3 to 10, in which the shifted frequencies are radiated in an alternately alternating manner into the resonator by applying corresponding frequencies to the regulated frequency-shifting device.

13. Device according to one of the preceding Claims 3 to 11, in which the shifted frequencies are radiated in an alternately alternating manner into the resonator by diaphragms (21, 22) which can be controlled by electromagnetic or piezoelectric means.

14. Device according to one of the preceding Claims 3 to 11, in which the shifted frequencies are continuously radiated into the resonator but are additionally differently modulated and separated again after the photodetector (16) by appropriate filtering.


**Revendications**

1. Procédé de mesure de vitesses angulaires par effet Sagnac, dans lequel

un rayon lumineux provenant d'une source lumineuse cohérente est séparé en plusieurs rayons lumineux partiels, qui sont émis dans une bobine de fibres optiques dans des sens opposés,

après leur passage à travers la bobine de fibres optiques, les rayons lumineux partiels sont réunis en un rayon lumineux unique, qui excite un photo-détecteur et dans lequel

afin de déterminer des vitesses de rotation, le déphasage Sagnac résultant d'une rotation est compensé électroniquement par un postréglage, caractérisé en ce que

trois rayons lumineux partiels (4, 5, 6) sont produits,

un premier rayon lumineux partiel (5) étant injecté dans la bobine de fibres optiques (10) dans un sens, tandis que

le second et le troisième rayon lumineux partiel (4, 6) sont injectés dans la bobine (10) dans le sens opposé,

la fréquence du premier rayon lumineux partiel est augmentée d'une certaine valeur de fréquence tandis que la fréquence du troisième rayon lumineux partiel est diminuée d'une valeur de fréquence approximativement égale, les deux valeurs de fréquence étant réglées de telle sorte que les différences de phase optique, après passage à travers la bobine de fibres optiques (10) et réunion du premier rayon lumineux partiel avec le second (respectivement avec le troisième) rayon lumineux partiel, soient maintenues constantes et, de préférence, égales à une valeur de $m \cdot 2\pi$, (m entier), (respectivement $k \cdot 2\pi$, (k entier)),

les fréquences de différence entre le premier rayon lumineux partiel et le second et entre le premier et le troisième rayon lumineux partiel peuvent alors être lues et

on détermine le quotient de la différence sur la somme des deux valeurs de fréquences de différence et on en déduit une mesure de la vitesse angulaire.

2. Procédé, selon la revendication 1, caractérisé en ce que les fréquences de différence sont additionnées, ce qui permet de déterminer la longueur optique de la bobine de fibres optiques (10) et par conséquent le facteur d'échelle de la mesure de la vitesse angulaire ainsi que la température.

3. Dispositif de détermination de vitesse angulaire grâce à l'effet Sagnac, dans lequel un rayon lumineux provenant d'une source lumineuse cohérente (1) est divisé en plusieurs rayons lumineux partiels, qui sont injectés dans des sens opposés dans une bobine de fibres optiques (10), comprenant :

un modulateur pour au moins un des rayons lumineux partiels,

un dispositif permettant de réassembler les rayons lumineux partiels en un rayon lumineux unique après passage dans la bobine de fibres optiques,

un photo-détecteur (12) excité par le rayon réassemblé,

un montage de réglage, qui, afin de déterminer la vitesse angulaire, compense électroniquement par un postréglage, le déphasage Sagnac résultant d'une rotation,

un dispositif de séparation de rayon (K ; 3, 9') permettant de diviser le rayon lumineux provenant de la source lumineuse (1) en au moins trois rayons lumineux partiels (4, 5, 6),

un dispositif d'injection d'un premier rayon lumineux partiel dans la bobine de fibres optiques (10) dans un sens,

un dispositif d'injection du second et du troisième rayon lumineux partiel dans la bobine de fibres optiques dans le sens opposé,

des dispositifs de décalage de fréquence, permettant d'augmenter la fréquence du second rayon lumineux partiel (4) d'une valeur de fréquence déterminée et de diminuer la fréquence du troisième rayon lumineux partiel (6) d'une autre valeur de fréquence déterminée,

un dispositif de réglage (15, 16, 18) pour les deux valeurs de fréquence, monté de telle sorte que les différences de phase optique, après passage des trois rayons lumineux partiels à travers la bobine de fibres optiques (10) et après réunion du premier rayon lumineux partiel avec le second, respectivement avec le troisième rayon lumineux partiel, soient maintenues constantes et de préférence égales à une valeur de phase de $m \cdot 2\pi$, m entier, respectivement $k \cdot 2\pi$, k entier,

un photo-détecteur (12) pour la réception de tous les rayons lumineux partiels par l'intermédiaire du dispositif de séparation des rayons, après que ceux-ci aient traversé la bobine de fibres optiques (10), et comprenant :

un montage d'analyse permettant de déterminer la différence et la somme des fréquences de différence ainsi que de calculer la vitesse angulaire à partir du quotient de la différence et de la somme et d'en déduire le facteur d'échelle et la température de la bobine à partir de la somme des deux fréquences de différence.

4. Dispositif, selon la revendication 3, caractérisé en ce que la bobine de fibres optiques (10) est composée de fibres monomodales fortement biréfringentes et ayant des propriétés de polarisation.

5. Dispositif, selon la revendication 3, caractérisé en ce que la bobine de fibres optiques (10) est composée de fibres monomodales polarisantes.

6. Dispositif, selon la revendication 3, caractérisé en ce que la bobine de fibres optiques (10) est composée de fibres monomodales quelconques et d'un polariseur.

7. Dispositif, selon la revendication 3, caractérisé en ce que des modulateurs et des coupleurs sont réalisés en optique intégrée.

8. Dispositif, selon l'une des revendications précédentes 3 à 7, caractérisé en ce que le dispositif réglable de décalage de fréquence est composé de deux cristaux de Bragg.

9. Dispositif, selon l'une des revendications précédentes 3 à 7, caractérisé en ce que le dispositif réglable de décalage de fréquence est un modulateur acoustico-optique avec deux excitateurs acoustiques.

10. Dispositif, selon l'une des revendications précédentes 3 à 7, caractérisé en ce que le dispositif réglable de décalage de fréquence est un cristal de Bragg unique muni de différents variateurs de fréquence.

11. Dispositif, selon l'une des revendications précédentes 3 à 7, caractérisé en ce que le dispositif de séparation des rayons et le dispositif réglable de décalage de fréquence se compose d'un modulateur acoustico-optique fonctionnant dans la zone Raman-Nath.

12. Dispositif, selon l'une des revendications précédentes 3 à 10, caractérisé en ce que les fréquences décalées sont introduites en alternance dans le résonateur par application de fréquences correspondantes au dispositif réglable de décalage de fréquence.

13. Dispositif selon l'une des revendications précédentes 3 à 11, caractérisé en ce que les fréquences décalées sont introduites en alternance dans le résonateur par l'intermédiaire de diaphragmes (21, 22) commandés électromagnétiquement ou piézo-électriquement.

14. Dispositif, selon l'une des revendications précédentes 3 à 11, caractérisé en ce que les fréquences décalées sont introduites dans le résonateur de façon continue, mais font l'objet d'une modulation supplémentaire différente avant d'être à nouveau séparées par un filtrage correspondant après le photo-détecteur (16).

FIG.1

EP 0 172 391 B1

FIG.2

FIG.3

EP 0 172 391 B1

# FIG.4

EP 0 172 391 B1